(19) **Europäisches Patentamt / European Patent Office / Office européen des brevets**

(11) **EP 1 887 243 B1**

(12) **EUROPÄISCHE PATENTSCHRIFT**

(45) Veröffentlichungstag und Bekanntmachung des Hinweises auf die Patenterteilung:
**22.09.2010 Patentblatt 2010/38**

(51) Int Cl.:
**F16D 48/04** *(2006.01)* **F16D 25/12** *(2006.01)*

(21) Anmeldenummer: **07013189.1**

(22) Anmeldetag: **05.07.2007**

(54) **Hydraulisches System für insbesondere ein Kraftfahrzeug**

Hydraulic system in particular for a motor vehicle

Système hydraulique pour véhicule automobile en particulier

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.08.2006 DE 102006037141**

(43) Veröffentlichungstag der Anmeldung:
**13.02.2008 Patentblatt 2008/07**

(73) Patentinhaber: **LuK Lamellen und Kupplungsbau Beteiligungs KG**
**77815 Bühl (DE)**

(72) Erfinder:
• **Grethel, Marco**
  **77830 Bühlertal (DE)**
• **Kremer, Eugen**
  **77815 Bühl (DE)**

(56) Entgegenhaltungen:
**EP-A- 1 167 111    DE-A1-102005 041 419**
**US-A- 4 644 968**

**Beschreibung**

Die vorliegende Erfindung betrifft ein hydraulisches System für insbesondere ein Kraftfahrzeug mit einem Geberzylinder und einem über eine Druckmediumsleitung damit verbundenen Nehmerzylinder sowie einer Pumpe und einem, einen ersten Ventilkolben aufweisenden Ventil, die in der Druckmediumsleitung zwischen Geberzylinder und Nehmerzylinder angeordnet sind und das Ventil eine erste Ventilstellung besitzt, in der der Geberzylinder und der Nehmerzylinder direkt miteinander verbunden sind sowie eine zweite Ventilstellung besitzt, in der der Geberzylinder und der Nehmerzylinder über die Pumpe miteinander verbunden sind.

Ein solches hydraulisches System ist beispielsweise anhand der DE 10 2005 041 419 A1 bekannt geworden. Dieses bekannte System kann beispielsweise dazu verwendet werden, eine Servowirkung bei der Betätigung einer Kupplung eines Fahrzeugs zu erreichen, indem der Fahrer des Fahrzeugs bei einer mittels Fußkraft betätigten Kupplung bezüglich der von ihm gespürten Pedalkraft entlastet wird. Zu diesem Zweck ist in dem hydraulischen System eine Pumpe vorhanden, die hydraulische Leistung in das System einträgt, die dazu verwendet werden kann, den Nehmerzylinder entsprechend zu beaufschlagen.

Dieses bekannte hydraulische System ist dabei so konfiguriert, dass die Kraftreduzierung dann erfolgt, wenn die vom Fahrer zu erbringende Pedalkraft eine bestimmte Schwelle erreicht und folgende Beziehung gilt

$$F_2 - F_{SCHWELLE} = k * (F_1 - F_{SCHWELLE}),$$

wobei $F_2$ die Pedalkraft mit Servounterstützung ist, $F_1$ die Pedalkraft ohne Servounterstützung ist, $F_{SCHWELLE}$ ein Schwellenwert der Unterstützung ist und der Faktor k einen Reduzierungsfaktor darstellt.

Dieses bekannte System hat sich als sehr vorteilhaft erwiesen und kann zur Verringerung der vom Fahrer gespürten Pedalkraft positiv beitragen. Das bekannte System besitzt aber auch Raum zu Verbesserungen, denn es hat sich herausgestellt, dass es von wesentlichem Vorteil ist bei neuen Kupplungen und bei solchen Kupplungen, die eine automatische Verschleißnächstellung bieten.

Es sind aber auch nach wie vor Kupplungssysteme bekannt, die nicht über eine solche Kompensation des unvermeidbaren Kupplungsverschleißes in der Form beispielsweise des Belagverschleißes verfügen. Bei einer solchen Kupplung steigt nun der Kupplungskraftbedarf wegen des Verschleißes der Kupplung an und damit auch die vorstehend erwähnte Pedalkraft ohne Servounterstützung $F_1$ und damit auch die Pedalkraft $F_2$ mit Servounterstützung. In Abhängigkeit des Verschleißzustandes der Kupplung nimmt daher die Pedalkraft auch mit Servounterstützung zu, so dass sich der Bedarf herausgestellt hat, das bekannte hydraulische System derart weiter zu bilden, dass auch eine verschleißbedingte Zunahme der Pedalkraft ausgeglichen werden kann.

Der vorliegenden Erfindung liegt nunmehr die Aufgabe zugrunde, das bekannte hydraulische System derart weiterzubilden, dass eine kupplungsverschleißbedingte Zunahme der Pedalkraft kompensiert werden kann.

Die Erfindung schafft nunmehr zur Lösung dieser Aufgabe ein hydraulisches System mit den Merkmalen des Anspruchs 1. Vorteilhafte Ausgestaltungen hiervon sind in den weiteren Ansprüchen beschrieben.

Die Erfindung sieht ein hydraulisches System vor für insbesondere ein Kraftfahrzeug mit einem Geberzylinder und einem über eine Druckmediumsleitung damit verbundenen Nehmerzylinder sowie einer Pumpe und einem, einen ersten Ventilkolben aufweisenden Ventil, die in der Druckmediumsleitung zwischen Geberzylinder und Nehmerzylinder angeordnet sind und das Ventil eine erste Ventilstellung besitzt, in der der Geberzylinder und der Nehmerzylinder direkt miteinander verbunden sind sowie eine zweite Ventilstellung besitzt, in der der Geberzylinder und der Nehmerzylinder über die Pumpe miteinander verbunden sind, wobei das Ventil auch eine dritte Ventilstellung besitzt, in der eine den Nehmerzylinder über die Pumpe beaufschlagende Druckkraft, die größer ist als ein vorbestimmbarer Schwellenwert, auf den Geberzylinder weitgehend rückwirkungsfrei bleibt. Damit schafft das erfindungsgemäße hydraulische System eine Kompensation für einen anderenfalls stattfindenden Anstieg der Pedalkraft am Geberzylinder aufgrund eines kupplungsverschleißbedingten Anstiegs der Pedalkraft.

Wenn nämlich die fußkraftbetätigte Kupplung einen bestimmten Verschleißzustand erreicht hat, so steigt der Verfahrweg des Kolbens des Nehmerzylinders aufgrund des verschleißbedingt zunehmenden Betätigungswegs der Kupplung an. Über die Belagfeder der Kupplung in der Form beispielsweise einer Tellerfeder führt dies zu einem Anstieg der Kupplungskraft, die vom hydraulischen System ausgeglichen werden muss.

Steht nun der Nehmerzylinder mit dem Geberzylinder direkt in Verbindung, so führt dies zu einem Anstieg des Drucks im Geberzylinder mit der Folge einer zunehmenden Pedalkraft. Auch wenn das vorstehend bereits beschriebene bekannte hydraulische System zur Betätigung der nicht selbst nachstellenden Kupplung verwendet wird, so führt dies aufgrund der Koppelung des Geberzylinders mit dem Nehmerzylinder über die Pumpe zu einem Anstieg des Druckniveaus im Druckraum des Geberzylinders und infolge dessen zu einem vom Fahrer spürbaren Anstieg der Pedalkraft.

An dieser Stelle setzt nun die Erfindung ein und sieht eine dritte Ventilstellung vor, in der eine den Nehmerzylinder über die Pumpe beaufschlagende Druckkraft, die größer ist als ein vorbestimmbarer Schwellenwert, auf den Geberzylinder weitgehend rückwirkungsfrei bleibt. Damit besitzt das Ventil eine dritte Ventilstellung, in der auch zum Ausgleich eines Verschleißzustandes der Kupplung und eines damit einhergehenden ansteigenden Betätigungswegs der Kupplung auf der Seite des Nehmerzylinders eine Druckkraft eingebracht werden kann, um dort zu einer ansteigenden Betätigungskraft durch den Nehmerzylinder zu führen, während diese Zunahme der Kupplungsbetätigungskraft durch den Nehmerzylinder aber keine drucksteigernde Rückwirkung auf den Geberzylinder ausübt und somit dieser verschleißbedingte Anstieg der Kupplungsbetätigungskraft auf der Seite des Nehmerzylinders nicht zu einem Anstieg der Pedalkraft auf der Seite des Geberzylinders führt.

Um diese Entkoppelung des beispielsweise belagverschleißbedingten Anstiegs der Kupplungskraft von der Pedalkraft am Geberzylinder zu erreichen, ist es nach einer Weiterbildung der Erfindung vorgesehen, dass das Ventil derart ausgebildet ist, dass ab dem vorbestimmbaren Schwellenwert ein nehmerzylinderseitig herrschender Druck den ersten Ventilkolben so beaufschlägt, dass eine den Geberzylinderdruck bestimmende erste Rückführfläche des ersten Ventilkolbens weitgehend verlagerungsfrei bleibt.

Damit schafft die Erfindung die Möglichkeit, dass auch bei einem nehmerzylinderseitig zunehmenden Druck die den Geberzylinderdruck bestimmende erste Rückführfläche des ersten Ventilkolbens weitgehend nicht verlagert wird, so dass keine Rückwirkung und damit Drucksteigerung im Geberzylinder stattfindet und somit der nehmerzylinderseitig stattfindende Anstieg der Betätigungskraft aufgrund des Kupplungsbelagverschleißes nicht zu einem Anstieg des Drucks im Geberzylinder führt und damit nicht zu einer Zunahme der Pedalkraft am Geberzylinder.

Der Schwellenwert der Druckkraft, mit dem der Nehmerzylinder von der Pumpe beaufschlagt wird, kann vorbestimmt werden. Bei einem weiteren Anstieg der Betätigungskraft der Kupplung aufgrund des Belagverschleißes nimmt die Betätigungskraft des Nehmerzylinders zu und daher wird dieser mit einem weiter ansteigenden Druck beaufschlagt.

Damit sich dieser zunehmende Druck im Nehmerzylinder nun nicht geberzylinderseitig negativ auswirkt, ist es nach einer Weiterbildung der Erfindung vorgesehen, dass sich der nehmerzylinderseitig herrschende Druck ab dem vorbestimmbaren Schwellenwert an in einer Ventilbohrung angeordneten und den ersten Ventilkolbendruck beaufschlagenden Ringflächen derart abstützt, dass die den ersten Ventilkolben bei einer weiteren Erhöhung des nehmerzylinderseitig herrschenden Drucks beaufschlagende resultierende Kraft weitgehend Null ist, sich der nehmerzylinderseitig herrschende ansteigende Druck also nicht auf eine Verlagerung des ersten Ventilkolbens auswirkt.

Der erste Ventilkolben besitzt nach einer Weiterbildung der Erfindung eine erste Rückführfläche und auch eine zweite Rückführfläche, die kleiner ist als die erste Rückführfläche und gleichzeitig eine Steuerkante bildet, die das Ventil funktional von der ersten Ventilstellung in die zweite Ventilstellung umschaltet.

Solange also die Steuerkante beispielsweise eine in einem Ventilgehäuse gebildete Öffnung nicht verschlossen hält, kann der Geberzylinder mit dem Nehmerzylinder über die Druckmediumsleitung direkt verbunden sein. Führt nun eine geberzylinderseitige Zunahme des Druckniveaus zu einer Verlagerung des Ventilkolbens, da der geberzylinderseitige Druck eine Rückführfläche des Kolbens beaufschlägt, so steigt der Druck auch in einem Druckraum, der die zweite Rückführfläche des ersten Ventilkolbens beaufschlägt.

Da die zweite Rückführfläche aber kleiner ausgebildet ist als die erste Rückführfläche, führt dies zu einer Verlagerungsbewegung des Ventilkolbens im Ventilgehäuse und somit gelangt die an der zweiten Rückführfläche gebildete Steuerkante in den Einflussbereich der Öffnung, die den geberzylinderseitig herrschenden Druck in den Druckraum des Ventilgehäuses einleitet. Bei einem weiteren Ansteigen des geberzylinderseitigen Drucks werden die erste Rückführfläche und die zweite Rückführfläche mit diesem Druck beaufschlagt und der erste Ventilkolben gegen die Wirkung einer den ersten Ventilkolben beaufschlagenden Feder in der Ventilbohrung verschoben, bis die Steuerkante die Öffnung verschlossen hat und die direkte Kommunikation des Nehmerzylinders und des Geberzylinders unterbrochen wird und sich das Ventil in der zweiten Ventilstellung befindet, in der der Geberzylinder und der Nehmerzylinder über die Pumpe miteinander verbunden sind.

Nun kann der Nehmerzylinder über die Pumpe beaufschlagt werden. Nimmt nun der Verschleiß der Kupplung zu, so führt dies zu einem länger werdenden Betätigungsweg der Kupplung und einer damit einhergehenden Zunahme der Kupplungskraft. Diese verschleißbedingte Zunahme der Kupplungskraft muss vom Nehmerzylinder und damit vom nehmerzylinderseitig herrschenden Druck ausgeglichen werden.

Damit nun dieser Druckanstieg im Druckraum des Ventils nicht zu einer Verlagerung des ersten Ventilkolbens in der Ventilbohrung führt, ist es nach einer Weiterbildung der Erfindung vorgesehen, dass das Ventil einen zweiten Ventilkolben besitzt, der vom nehmerzylinderseitig herrschenden Druck beaufschlagt ist und eine Ringfläche besitzt, die einer am ersten Ventilkolben ausgebildeten zweiten Rückführfläche entspricht.

Dieser zweite Ventilkolben ist relativ zum ersten Ventilkolben in der Ventilbohrung axial verlagerbar und mittels Dichtelementen gegen den ersten Ventilkolben und die Ventilbohrung abgedichtet. Dieser zweite Ventilkolben wird nach einer Weiterbildung der Erfindung von einer zweiten Federeinrichtung gegen den die Ringfläche beaufschlagenden nehmerzylinderseitig herrschenden Druck vorgespannt und an einem am Ventil gebildeten Anschlag in Anlage gebracht.

Mittels der zweiten Federeinrichtung liegt der zweite Ventilkörper also an einem Anschlag des Ventils an und wird von dem nehmerzylinderseitig herrschenden Druck an der Ringfläche beaufschlagt, die genau so groß ist, wie die zweite Rückführfläche, so dass sich der nehmerzylinderseitig herrschende Druck sowohl an der zweiten Rückführfläche als auch an der Ringfläche abstützt. Steigt nun der nehmerzylinderseitig herrschende Druck aufgrund der von der Pumpe bereitgestellten Druckkraft über den vorbestimmbaren Schwellenwert an, so führt dies dazu, dass der zweite Ventilkolben an den ersten Ventilkolben gegen die Wirkung der zweiten Federeinrichtung eine Verlagerungsbewegung durchführt und vom Anschlag am Ventil abgehoben wird und der zweite Ventilkolben sodann mit einer am ersten Ventilkolben gebildeten Anschlagfläche in Anlage gebracht wird derart, dass sich ab dem vorbestimmbaren Schwellenwert der nehmerzylinderseitig herrschende Druck an der zweiten Rückführfläche und der Ringfläche abstützt und damit ein Kräftegleichgewicht am ersten Ventilkolben besteht und auch ein nehmerzylinderseitig herrschender ansteigender Druck zu einer den ersten Ventilkolben beaufschlagenden resultierenden Kraft von weitgehend Null führt.

Auch ein weiterer Anstieg des nehmerzylinderseitig herrschenden Drucks führt daher nicht mehr zu einer Verlagerungsbewegung des ersten Ventilkolbens in der Ventilbohrung, die zu einem Anstieg des Drucks im Geberzylinder führen würde mit einer entsprechenden negativen Folge auf die Pedalkraft.

Das Ventil besitzt ein Ventilgehäuse mit einer Ventilbohrung, in der der erste Ventilkolben gegen eine erste Federeinrichtung verlagert werden kann und zwar durch Druckbeaufschlagung mittels eines über die Druckmediumsleitung und eine erste Öffnung im Ventilgehäuse eine erste Rückführfläche beaufschlagenden geberzylinderseitig herrschenden Drucks und zudem besitzt das Ventilgehäuse auch eine zweite Öffnung, die mittels der vorstehend bereits erwähnten am ersten Ventilkolben ausgebildeten Steuerkante verschlossen werden kann.

Neben diesen beiden Öffnungen kann das Ventilgehäuse aber auch eine dritte Öffnung besitzen, über die sich der nehmerzylinderseitig herrschende Druck in einem im Ventilgehäuse ausgebildeten Druckraum zur Beaufschlagung der zweiten Rückführfläche und der Ringfläche des zweiten Ventilkolbens fortsetzt.

Steigt nun aufgrund eines stärker werdenden geberzylinderseitigen Drucks an der ersten Rückführfläche des ersten Ventilkolbens der Druck an, so führt dies zu einer Verlagerungsbewegung des ersten Ventilkolbens und auch dazu, dass der Druckraum vor der ersten Rückführfläche, die vom geberzylinderseitigen Druck beaufschlagt wird, eine Vergrößerung erfährt. Um nun Druckmediumsschwankungen zu vermeiden, kann es von Vorteil sein, in der Druckmediumsleitung zur ersten Öffnung hin eine Blende vorzusehen, die die vorstehend erwähnten Schwingungen bedämpft.

In der Druckmediumsleitung befindet sich zwischen der ersten und der zweiten Öffnung eine Verzweigung angeordnet, so dass sich der geberzylinderseitig herrschende Druck sowohl in Richtung der ersten Rückführfläche am ersten Ventilkolben als auch in Richtung zur zweiten Öffnung hin fortsetzen kann, die von der Steuerkante am ersten Ventilkolben verschlossen werden kann.

Geschieht dies, so liegt der geberzylinderseitig herrschende Druck nach wie vor an der ersten Rückführfläche an, eine Verbindung des Geberzylinders und des Nehmerzylinders findet dann aber über die Pumpe statt. Bei dem Geberzylinder kann es sich beispielsweise um einen fußkraftbetätigten Hydraulikzylinder eines Fahrzeugs handeln und der Nehmerzylinder kann eine Betätigungseinrichtung zur Betätigung einer Kupplung dieses Fahrzeugs beaufschlagen.

Nimmt nun aufgrund eines belagverschleißbedingten Anstiegs der Kupplungskraft die Betätigungskraft zu, die vom Nehmerzylinder erbracht werden muss, so führt dies ab dem vorstehend bereits erwähnten vorbestimmten Schwellenwert der den Nehmerzylinder beaufschlagenden Druckkraft nicht mehr dazu, dass die vom Fahrer gespürte Pedalkraft am Geberzylinder ansteigt, sondern dieser belagverschleißbedingte Anstieg der Kupplungskraft wird durch das erfindungsgemäße hydraulische System kompensiert.

Die Erfindung wird nunmehr im Folgenden anhand der Zeichnungen näher erläutert. Diese zeigt in:

Fig. 1 eine schematische Darstellung eines hydraulischen Systems anhand eines Ausführungsbeispiels einer Kupplungsausrückvorrichtung; und

Fig. 2 Kennliniendarstellung der geberzylinderseitigen Pedalkraft aufgetragen über dem Pedalweg.

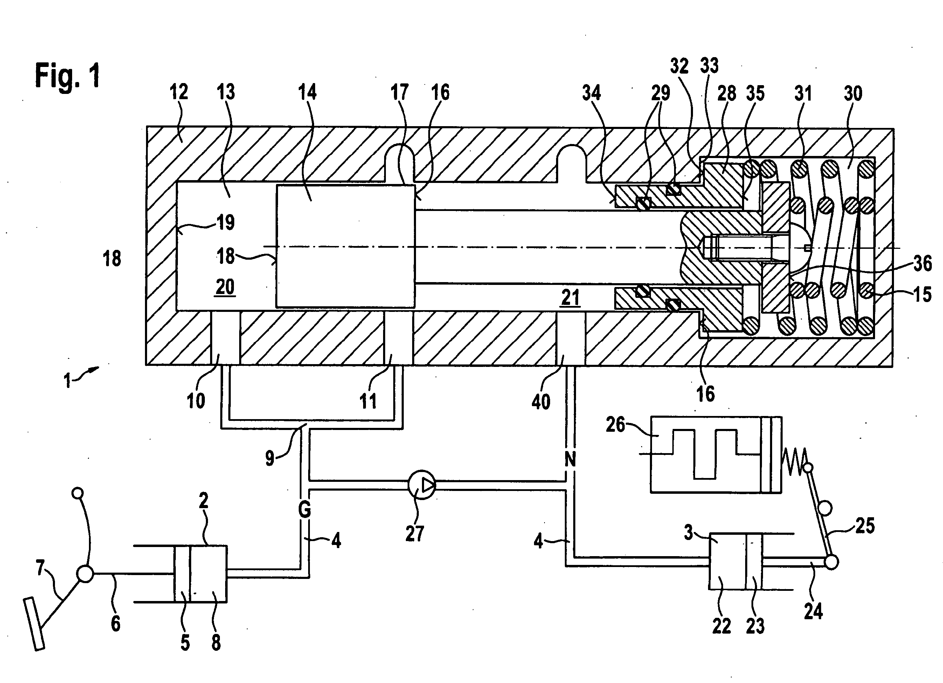

Fig. 1 der Zeichnung zeigt eine schematische Darstellung eines hydraulischen Systems in einer Ausführungsform gemäß der vorliegenden Erfindung als Kupplungsausrückvorrichtung.

Das hydraulische System 1 weist einen Geberzylinder 2 und einen Nehmerzylinder 3 auf. Darüber hinaus besitzt es eine Druckmediumsleitung 4, über die ein Druckmedium in der Form beispielsweise eines Hydrauliköls strömen kann.

Der in der Zeichnung ersichtliche Buchstabe G bezeichnet die Geberzylinderseite und der in der Zeichnung ersichtliche Buchstabe N bezeichnet die Nehmerzylinderseite. Der Geberzylinder 2 besitzt einen Geberzylinderkolben 5, der mittels einer Kolbenstange 6 betätigt wird. Die Betätigung erfolgt dabei über ein in der Zeichnung nur schematisch dargestelltes Pedal 7, das direkt oder indirekt auf die Kolbenstange 6 wirkt und in einem Druckraum 8 des Geberzylinders einen entsprechenden Druck aufbauen kann. Dieser Druck setzt sich über die Druckmediumsleitung 4 fort und liegt über eine Verzweigung 9 sowohl an einer ersten Öffnung 10 als auch an einer zweiten Öffnung 11 eines Ventilgehäuses 12 an.

Das Ventilgehäuse 12 besitzt eine Ventilbohrung 13, in der ein erster Ventilkolben 14 axial verschiebbar aufgenommen ist und zwar gegen die Wirkung einer ersten Federeinrichtung 15 in der Form einer Schraubendruckfeder.

In Fig. 1 der Zeichnung ist der erste Ventilkolben 14 in einer die zweite Öffnung 11 verschließenden Stellung gezeigt, in der eine an einer zweiten Rückführfläche 16 gebildete Steuerkante 17 die Öffnung 11 verschließt. Im nicht betätigten Zustand befindet sich der Ventilkolben 14 in der ersten Ventilstellung, in der der Ventilkolben 14 in der Ventilbohrung 13 in der Zeichnungsebene in Richtung nach links verschoben ist und mit einer ersten Rückführfläche 18 an einer inneren Fläche 19 der Ventilbohrung 13 zur Anlage kommt.

Wird nun der Geberzylinder 2 über eine Betätigung des Pedals 7 beaufschlagt, so setzt sich der im Druckraum 8 des Geberzylinders herrschende Druck über die Druckmediumsleitung 4 und die Verzweigung 9 sowie die erste Öffnung 10 in einen ersten Druckraum 20 der ersten Rückführfläche 18 fort und beaufschlagt diese dort. Zudem setzt sich der im Druckraum 8 des Geberzylinders 2 herrschende Druck über die Verzweigung 9 und die zweite Öffnung 11 in einen zweiten Druckraum 21 der Ventilbohrung 13 fort und beaufschlagt dort die zweite Rückführfläche 16, die kleiner ist, als die erste Rückführfläche 18.

Die Steuerkante 17 verschließt die erste Öffnung nicht und der im Geberzylinder 2 herrschende geberzylinderseitige Druck setzt sich über die Druckmediumsleitung 4, die zweite Öffnung 11, den zweiten Druckraum 21 und die nehmerzylinderseitige Druckleitung 4 zum Nehmerzylinder 3 fort und beaufschlagt dort den Druckraum 22 des Nehmerzylinders 3 und verlagert den dort axial verschiebbaren Kolben 23, der eine Kolbenstange 24 beaufschlagt, die wiederum eine Betätigungseinrichtung 25 zur Betätigung einer nur schematisch dargestellten Kupplung 26 beaufschlägt.

Solange also die zweite Öffnung 11 nicht von der Steuerkante 17 verschlossen ist, kommuniziert der Geberzylinder 2 mit dem Nehmerzylinder 3 direkt. Steigt nun der im ersten Druckraum 20 der ersten Rückführfläche 18 gebildete Druck an, so führt dies zu einer Verlagerung des ersten Ventilkolbens 14 in der Zeichnungsebene in Richtung nach rechts, die vom Fahrer über die Kraft am Pedal 7 wirkende Pedalkraft steigt an, bis die Steuerkante 17 die zweite Öffnung 11 verschlossen hat und der Nehmerzylinder 3 über die Pumpe 27 mit dem Geberzylinder 2 in Verbindung steht.

Nun kann über die Pumpe 27 hydraulische Energie in das hydraulische System eingetragen werden und im Druckraum 22 des Nehmerzylinders 3 der Druck erhöht werden mit einer entsprechenden ansteigenden Betätigungskraft zur Betätigung der Kupplung 26. Diese steigende Betätigungskraft kann über die Nehmerzylinderseite zu einer Druckerhöhung im Druckraum 21 der Ventilbohrung 13 führen, die beispielsweise dazu genutzt werden kann, am Pedal 7 einen vom Fahrer des Fahrzeugs gewünschten definierten Druckpunkt zu erzeugen.

Kommt es aber aufgrund eines kupplungsbelagverschleißbedingten Anstiegs der Kupplungskraft zu einer weiter zunehmenden Betätigungskraft, mit der die Betätigungseinrichtung die Kupplung 26 zum Öffnung beaufschlagen muss, so wird über die Pumpe 27 weitere hydraulische Leistung nehmerzylinderseitig eingetragen mit der Folge, dass in dem zweiten Druckraum 21 der Ventilbohrung 13 über eine dritte Öffnung 40 der Druck weiter zunimmt.

Ab einem den Nehmerzylinder 3 beaufschlagenden vorbestimmten Schwellenwert der Druckkraft führt aber ein weiterer Druckanstieg in dem zweiten Druckraum 21 zu einer Verlagerungsbewegung in der Zeichnungsebene in Richtung nach rechts eines an dem ersten Ventilkolben 14 axial verschiebbaren zweiten Ventilkolbens 28.

Dieser zweite Ventilkolben 28 dichtet über Dichtelemente 29 den Druckraum 21 gegen einen Raum 30 im Ventilgehäuse 12 ab, in der die den ersten Ventilkolben 14 beaufschlagende erste Federeinrichtung 15 angeordnet ist. In diesem Raum 30 ist auch eine den zweiten Ventilkolben 28 beaufschlagende zweite Federeinrichtung 31 angeordnet. Der zweite Ventilkolben 28 besitzt eine Anschlagfläche 32, die an einem in der Ventilbohrung 13 gebildeten Anschlag 32 zur Anlage kommt, wenn der zweite Ventilkolben 28 von der zweiten Federeinrichtung 31 beaufschlagt wird und von dem im zweiten Druckraum 21 herrschenden nehmerzylinderseitigen Druck noch nicht verlagert worden ist.

Kommt es nun zu einem weiteren Anstieg des nehmerzylinderseitigen Drucks im zweiten Druckraum 21, so führt dies ab dem vorbestimmten Schwellenwert aufgrund der Beaufschlagung der Ringfläche 34 des zweiten Ventilkolbens 28 zu einer Bewegung des zweiten Ventilkolbens 28 in der Zeichnungsebene in Richtung nach rechts, bis der zweite Ventilkolben 28 mit seiner Stirnfläche 35 an der Stirnfläche 36 des ersten Ventilkolbens 14 zur Anlage kommt und somit ein Kräftegleichgewicht besteht an dem ersten Ventilkolben 14, da die zweite Rückführfläche 16 von dem im zweiten Druckraum 21 herrschenden nehmerzylinderseitigen Druck beaufschlagt wird und auch die Ringfläche 34 des zweiten Ventilkolbens 28 und sich somit die an der zweiten Rückführfläche 16 und an der Ringfläche 34 gebildeten Kräfte im Gleichgewicht befinden, da der zweite Ventilkolben 28 mit seiner Stirnfläche 35 an der Stirnfläche 36 des ersten Ventilkolbens 14 anliegt und sich somit eine Druckerhöhung in dem Druckraum 22 des Nehmerzylinders 3 nicht in einer Verlagerungsbewegung des ersten Ventilkolbens 14 auswirkt. Die Druckerhöhung in dem zweiten Druckraum 21 des Nehmerzylinders 3 führt daher nicht zu einer Druckerhöhung in dem ersten Druckraum 20 der ersten Rückführfläche und damit zu einer Erhöhung des geberzylinderseitigen Drucks.

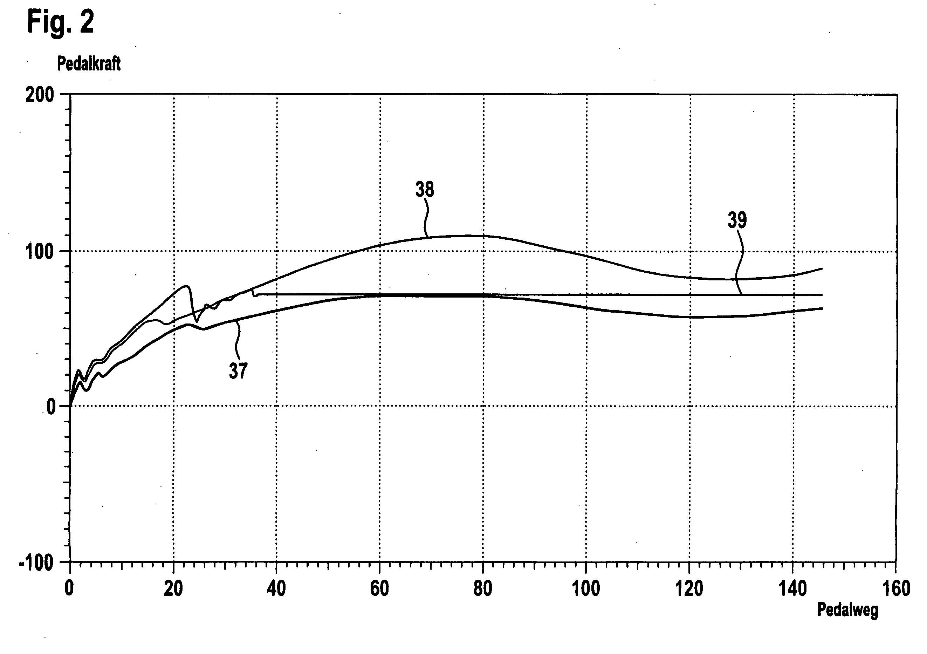

Fig. 2 der Zeichnung nun zeigt Kennlinienverläufe der Pedalkraft aufgetragen über den Pedalweg des Geberzylinders.

Der mit dem Bezugszeichen 37 bezeichnete Kurvenzug zeigt den Verlauf der Pedalkraft über dem Pedalweg einer Kupplungsausrückvorrichtung, die nach dem bekannten hydraulischen System arbeitet. Wie es ohne weiteres ersichtlich ist, steigt die Pedalkraft zunächst an und erreicht dann entlang einem Pedalweg von etwa 60 - 80 mm einen nahezu konstanten Wert, um dann geringfügig abzufallen. Der obere Kurvenzug 38 zeigt den Verlauf der Pedalkraft über den Pedalweg der Kupplungsausrückvorrichtung, die nach dem bekannten hydraulischen System arbeitet, bei der die Kupplung aber bereits einen bestimmten Belagverschleiß erlitten hat. Vergleichen mit dem Kurvenzug 37 wird sofort ersichtlich, dass die Pedalkraft deutlich höhere Werte angenommen hat, da die Kupplungskraft zugenommen hat und sich die daraus resultierende Druckerhöhung im Druckraum des Nehmerzylinders bis in den Druckraum des Geberzylinders fortsetzt und dort für eine spürbar höhere Pedalkraft am Pedal sorgt.

Der Kurvenzug 39 nun zeigt den Verlauf der Pedalkraft über dem Pedalweg einer Kupplungsausrückvorrichtung, die von der Erfindung Gebrauch macht und bei der das hydraulische System zum Einsatz kommt. Obwohl die hier betätigte Kupplung dem Verschleißzustand entspricht, der zur Aufnahme des Kurzenzuges 38 geführt hat, steigt die Pedalkraft nicht auf die hohen Werte an, die vom Kurvenzug 38 gezeigt werden. Die Pedalkraft steigt zunächst ähnlich dem Kurvenzug 37 an und nimmt dann einen weitgehend gleich bleibenden Wert über den vollständigen Pedalweg an, so dass auch bei einer verschleißbedingten Zunahme der Betätigungskraft durch den Nehmerzylinder keine Druckerhöhung im Geberzylinder erfolgt mit einer entsprechenden Zunahme der Pedalkraft.

Mit dem erfindungsgemäßen hydraulischen System ist es daher möglich, den Geberzylinderdruck auch bei über einen vorbestimmbaren Schwellenwert der Druckbeaufschlagung des Nehmerzylinders steigenden Wert den Geberzylinderdruck konstant zu halten, so dass sich letztlich eine verschleißbedingte Verschiebung der Kennlinie der Kupplungsbetätigungskraft nicht in einer Zunahme des Geberzylinderdrucks äußert.

Die Erfindung schafft daher ein hydraulisches System für Servounterstützung der Kupplungspedalbetätigung, bei der durch das Gleichgewicht der beiden Ventilkolben zwischen dem Geberzylinderdruck und dem Nehmerzylinderdruck ein linearer Zusammenhang gehalten werden kann und eine Begrenzung des Geberzylinderdrucks auch bei einem Verschleiß der betätigten Kupplung erreicht werden kann.

Hinsichtlich vorstehend im Einzelnen nicht näher erläuterter Merkmale der Erfindung wird im Übrigen ausdrücklich auf die Ansprüche und die Zeichnung verwiesen.

**Bezugszeichenliste**

| 1 | hydraulisches System |
|---|---|
| 2 | Geberzylinder |
| 3 | Nehmerzylinder |
| 4 | Druckmediumsleitung |
| 5 | Geberzylinderkolben |
| 6 | Kolbenstange |
| 7 | Pedal |
| 8 | Druckraum des Geberzylinders |
| 9 | Verzweigung |
| 10 | Erste Öffnung |
| 11 | Zweite Öffnung |
| 12 | Ventilgehäuse |
| 13 | Ventilbohrung |
| 14 | Erster Ventilkolben |
| 15 | Erste Federeinrichtung |
| 16 | Zweite Rückführfläche |
| 17 | Steuerkante |
| 18 | Erste Rückführfläche |
| 19 | Fläche |
| 20 | Erster Druckraum der ersten Rückführfläche |
| 21 | Zweiter Druckraum der Ventilbohrung |
| 22 | Druckraum des Nehmerzylinders |
| 23 | Kolben des Nehmerzylinders |
| 24 | Kolbenstange des Nehmerzylinders |
| 25 | Betätigungseinrichtung |
| 26 | Kupplung |
| 27 | Pumpe |
| 28 | Zweiter Ventilkolben |
| 29 | Dichtelemente |
| 30 | Raum |
| 31 | Zweite Federeinrichtung |
| 32 | Anschlagfläche |
| 33 | Anschlag |
| 34 | Ringfläche |
| 35 | Stirnfläche |
| 36 | Stirnfläche |
| 37 | Kurvenzug |
| 38 | Kurvenzug |
| 39 | Kurvenzug |
| 40 | Dritte Öffnung |
| G | Geberzylinderseite |
| N | Nehmerzylinderseite |

**Patentansprüche**

1. Hydraulisches System für insbesondere ein Kraftfahrzeug mit einem Geberzylinder (2) und einem über eine Druckmediumsleitung (4) damit verbundenen Nehmerzylinder (3) sowie einer Pumpe (27) und einem, einen ersten Ventilkolben (14) aufweisenden Ventil, die in der Druckmediumsleitung (4) zwischen Geberzylinder (2) und Nehmerzylinder (3) angeordnet sind und das Ventil eine erste Ventilstellung besitzt, in der der Geberzylinder (2) und der Nehmerzylinder (3) direkt miteinander verbunden sind sowie eine zweite Ventilstellung besitzt, in der der Geberzylinder (2) und der Nehmerzylinder (3) über die Pumpe (27) miteinander verbunden sind, **dadurch gekennzeichnet, dass** das Ventil eine dritte Ventilstellung besitzt, in der eine den Nehmerzylinder (3) über die Pumpe (27) beaufschlagende Druckkraft, die größer ist als ein vorbestimmbarer Schwellenwert, auf den Geberzylinder (2) weitgehend rückwirkungsfrei bleibt.

2. Hydraulisches System nach Anspruch 1, **dadurch gekennzeichnet, dass** das Ventil derart ausgebildet ist, dass ab dem vorbestimmbaren Schwellenwert ein nehmerzylinderseitig herrschender Druck den ersten Ventilkolben (14) so beaufschlägt, dass eine den Geberzylinderdruck bestimmende erste Rückführfläche (18) des ersten Ventilkolbens (14) weitgehend verlagerungsfrei bleibt.

3. Hydraulisches System nach Anspruch 1 oder 2, **dadurch gekennzeichnet, dass** sich der nehmerzylinderseitig herrschende Druck ab dem vorbestimmbaren Schwellenwert an in einer Ventilbohrung (13) angeordneten und den ersten Ventilkolben (14) druckkraftbeaufschlagenden Ringflächen (16; 34) abstützt derart, dass die den ersten Ventilkolben (14) bei einer weiteren Erhöhung des nehmerzylinderseitig herrschenden Drucks beaufschlagende resultierende Kraft weitgehend Null ist.

4. Hydraulisches System nach einem der vorstehenden Ansprüche, **gekennzeichnet durch** einen ersten Ventilkolben (14) mit einer ersten Rückführfläche (18) und einer zweiten Rückführfläche (16), die kleiner ist als die erste Rückführfläche (18) und eine Steuerkante (17) bildet, die das Ventil funktional von der ersten Ventilstellung in die zweite Ventilstellung umschaltet.

5. Hydraulisches System nach einem der vorstehenden Ansprüche, **gekennzeichnet durch** einen zweiten Ventilkolben (28), der vom nehmerzylinderseitig herrschenden Druck beaufschlagt ist und eine Ringfläche (34) besitzt, die einer am ersten Ventilkolben (14) ausgebildeten zweiten Rückführfläche (16) entspricht.

6. Hydraulisches System nach Anspruch 5, **dadurch gekennzeichnet, dass** der zweite Ventilkolben (28) relativ zum ersten Ventilkolben (14) in der Ventilbohrung (13) axial verlagerbar ist und mittels Dichtelementen (29) gegen den ersten Ventilkolben (14) und die Ventilbohrung (13) abgedichtet ist.

7. Hydraulisches System nach Anspruch 5 oder 6, **da-**

**durch gekennzeichnet, dass** der zweite Ventilkolben (28) von einer zweiten Federeinrichtung (31) gegen den die Ringfläche (34) beaufschlagenden nehmerzylinderseitig herrschenden Druck vorgespannt ist und an einem am Ventil gebildeten Anschlag (33) in Anlage bringbar ist.

8. Hydraulisches System nach einem der vorstehenden Ansprüche, **dadurch gekennzeichnet, dass** der erste Ventilkolben (14) an einer einer ersten Rückführfläche (18) gegenüber liegender Seite von einer ersten Federeinrichtung (15) beaufschlagt ist.

9. Hydraulisches System nach einem der Ansprüche 5 bis 8, **dadurch gekennzeichnet, dass** der zweite Ventilkolben (28) mit einer am ersten Ventilkolben (14) gebildeten Anschlagfläche (32) in Anlage bringbar ist derart, dass sich ab dem vorbestimmbaren Schwellenwert der nehmerzylinderseitig herrschende Druck an der zweiten Rückführfläche (16) und der Ringfläche (34) abstützt.

10. Hydraulisches System nach einem der vorstehenden Ansprüche, **dadurch gekennzeichnet, dass** das Ventil ein Ventilgehäuse (12) mit einer Ventilbohrung (13) besitzt, in der der erste Ventilkolben (14) gegen eine erste Federeinrichtung (15) durch Druckbeaufschlagung mittels eines über die Druckmediumsleitung (4) und eine erste Öffnung (10) im Ventilgehäuse (12) eine erste Rückführfläche (18) beaufschlagenden geberzylinderseitig herrschenden Drucks axial verlagerbar ist und das Ventilgehäuse (12) eine zweite Öffnung (11) besitzt, die mittels einer am ersten Ventilkolben (14) ausgebildeten Steuerkante (17) verschließbar ist.

11. Hydraulisches System nach Anspruch 10, **dadurch gekennzeichnet, dass** das Ventilgehäuse eine dritte Öffnung (40) besitzt, über die sich der nehmerzylinderseitig herrschende Druck in einem im Ventilgehäuse ausgebildeten Druckraum (21) zur Beaufschlagung der zweiten Rückführfläche (16) und der Ringfläche (34) fortsetzt.

12. Hydraulisches System nach einem der vorstehenden Ansprüche, **dadurch gekennzeichnet, dass** in der Druckmediumsleitung (4) zwischen Geberzylinder (2) und erster Rückführfläche (18) eine Blende zur Bedämpfung von Druckmediumsschwingungen angeordnet ist.

13. Hydraulisches System nach einem der Ansprüche 10 bis 12, **dadurch gekennzeichnet, dass** in der Druckmediumsleitung (4) zwischen der ersten (10) und der zweiten Öffnung (11) eine Verzweigung (9) angeordnet ist und der Geberzylinder (2) ein fußkraftbetätigter Hydraulikzylinder eines Fahrzeugs ist.

**14.** Hydraulisches System nach einem der vorstehenden Ansprüche, **dadurch gekennzeichnet, dass** der Nehmerzylinder (3) eine Betätigungseinrichtung (25) zur Betätigung eines Kupplung (26) eines Fahrzeugs beaufschlägt.

**15.** Verwendung des hydraulischen Systems nach einem der vorstehenden Ansprüche zur Betätigung einer Kupplung (26) eines Fahrzeugs.

**16.** Verwendung des hydraulischen Systems nach einem der Ansprüche 1-14 zur Kompensation eines kupplungsverschleißbedingten Anstiegs der Kupplungskraft.

**Claims**

**1.** Hydraulic system in particular for a motor vehicle, having a master cylinder (2) and having a slave cylinder (3) connected thereto via a pressure medium line (4) and also having a pump (27) and having a valve which has a first valve piston (14), which pump (27) and valve are arranged in the pressure medium line (4) between the master cylinder (2) and slave cylinder (3), and the valve has a first valve position in which the master cylinder (2) and the slave cylinder (3) are directly connected to one another and also a second valve position in which the master cylinder (2) and the slave cylinder (3) are connected to one another via the pump (27), **characterized in that** the valve has a third valve position in which a pressure force acting on the slave cylinder (3) by means of the pump (27) which is greater than a predeterminable threshold value remains substantially without reaction on the master cylinder (2).

**2.** Hydraulic system according to Claim 1, **characterized in that** the valve is designed such that, above the predeterminable threshold value, a pressure prevailing at the slave cylinder side acts on the first valve piston (14) in such a way that a first return surface (18), which determines the master cylinder pressure, of the first valve piston (14) remains substantially non-displaced.

**3.** Hydraulic system according to Claim 1 or 2, **characterized in that** the pressure prevailing at the slave cylinder side is supported, above the predeterminable threshold value, in such a way on annular surfaces (16; 34) which are arranged in a valve bore (13) and which act on the first valve piston (14) with pressure force that the resultant force acting on the first valve piston (14) in the event of a further increase in the pressure prevailing at the slave cylinder side is substantially zero.

**4.** Hydraulic system according to one of the preceding claims, **characterized by** a first valve piston (14) with a first return surface (18) and a second return surface (16) which is smaller than the first return surface (18) and forms a control edge (17) which switches the valve functionally from the first valve position into the second valve position.

**5.** Hydraulic system according to one of the preceding claims, **characterized by** a second valve piston (28) which is acted on by the pressure prevailing at the slave cylinder side and which has an annular surface (34) which corresponds to a second return surface (16) formed on the first valve piston (14).

**6.** Hydraulic system according to Claim 5, **characterized in that** the second valve piston (28) is axially movable relative to the first valve piston (14) in the valve bore (13) and is sealed off against the first valve piston (14) and the valve bore (13) by means of sealing elements (29).

**7.** Hydraulic system according to Claim 5 or 6, **characterized in that** the second valve piston (28) is preloaded by a second spring device (31) counter to the pressure prevailing at the slave cylinder side and acting on the annular surface (34), and can be placed in contact against a stop (33) formed on the valve.

**8.** Hydraulic system according to one of the preceding claims, **characterized in that** the first valve piston (14) is acted on, at a side situated opposite a first return surface (18), by a first spring device (15).

**9.** Hydraulic system according to one of Claims 5 to 8, **characterized in that** the second valve piston (28) can be placed in contact in such a way against a stop surface (32) formed on the first valve piston (14) that, above the predeterminable threshold value, the pressure prevailing at the slave cylinder side is supported on the second return surface (16) and on the annular surface (34).

**10.** Hydraulic system according to one of the preceding claims, **characterized in that** the valve has a valve housing (12) with a valve bore (13) in which the first valve piston (14) is axially movable counter to a first spring device (15) by being acted on with pressure by means of a pressure prevailing at the master cylinder side and acting on a first return surface (18) via the pressure medium line (4) and via a first opening (10) in the valve housing (12), and the valve housing (12) has a second opening (11) which can be closed by means of a control edge (17) formed on the first valve piston (14).

**11.** Hydraulic system according to Claim 10, **characterized in that** the valve housing has a third opening (40) via which the pressure prevailing at the slave cylinder side propagates in a pressure chamber (21) formed in the valve housing to act on the second return surface (16) and the annular surface (34).

12. Hydraulic system according to one of the preceding claims, **characterized in that** an orifice for damping pressure medium oscillations is arranged in the pressure medium line (4) between the master cylinder (2) and the first return surface (18).

13. Hydraulic system according to one of Claims 10 to 12, **characterized in that** a branch (9) is arranged in the pressure medium line (4) between the first (10) and the second opening (11) and the master cylinder (2) is a foot-actuated hydraulic cylinder of a vehicle.

14. Hydraulic system according to one of the preceding claims, **characterized in that** the slave cylinder (3) acts on an actuating device (25) for actuating a clutch (26) of a vehicle.

15. Use of the hydraulic system according to one of the preceding claims for actuating a clutch (26) of a vehicle.

16. Use of the hydraulic system according to one of Claims 1 to 14 for compensating a clutch-wear-induced increase in the clutch force.

**Revendications**

1. Système hydraulique, notamment pour un véhicule automobile, comprenant un maître-cylindre (2) et un cylindre récepteur (3) connecté à celui-ci par le biais d'une conduite de fluide sous pression (4), ainsi qu'une pompe (27) et une soupape présentant un premier piston de soupape (14), qui sont disposés dans la conduite de fluide sous pression (4) entre le maître-cylindre (2) et le cylindre récepteur (3), la soupape présentant une première position de soupape dans laquelle le maître-cylindre (2) et le cylindre récepteur (3) sont connectés directement l'un à l'autre ainsi qu'une deuxième position de soupape, dans laquelle le maître-cylindre (2) et le cylindre récepteur (3) sont connectés l'un à l'autre par le biais de la pompe (27), **caractérisé en ce que** la soupape possède une troisième position de soupape, dans laquelle une force de pression sollicitant le cylindre récepteur (3) par le biais de la pompe (27), qui est supérieure à une valeur seuil prédéterminable, reste essentiellement sans réaction sur le maître-cylindre (2).

2. Système hydraulique selon la revendication 1, **caractérisé en ce que** la soupape est réalisée de telle sorte qu'à partir de la valeur seuil prédéterminable, une pression régnant du côté du cylindre récepteur sollicite le premier piston de soupape (14) de telle sorte qu'une première surface de retour (18) du premier piston de soupape (14) déterminant la pression du maître-cylindre ne soit pas sensiblement déplacée.

3. Système hydraulique selon la revendication 1 ou 2, **caractérisé en ce que** la pression régnant du côté du cylindre récepteur à partir de la valeur seuil prédéterminable s'exerce sur des surfaces annulaires (16 ; 34) disposées dans un alésage de soupape (13) et sollicitant par une force de pression le premier piston de soupape (14), de telle sorte que la force résultante sollicitant le premier piston de soupape (14) dans le cas d'une augmentation supplémentaire de la pression régnant du côté du cylindre récepteur soit essentiellement nulle.

4. Système hydraulique selon l'une quelconque des revendications précédentes, **caractérisé par** un premier piston de soupape (14) avec une première surface de retour (18) et une deuxième surface de retour (16), qui est plus petite que la première surface de retour (18) et forme une arête de commande (17), qui fait passer la soupape fonctionnellement de la première position de soupape dans la deuxième position de soupape.

5. Système hydraulique selon l'une quelconque des revendications précédentes, **caractérisé par** un deuxième piston de soupape (28), qui est sollicité par la pression régnant du côté du cylindre récepteur et qui possède une surface annulaire (34), qui correspond à une deuxième surface de retour (16) réalisée sur le premier piston de soupape (14).

6. Système hydraulique selon la revendication 5, **caractérisé en ce que** le deuxième piston de soupape (28) peut être déplacé axialement par rapport au premier piston de soupape (14) dans l'alésage de soupape (13) et est scellé hermétiquement au moyen d'éléments d'étanchéité (29) contre le premier piston de soupape (14) et l'alésage de soupape (13).

7. Système hydraulique selon la revendication 5 ou 6, **caractérisé en ce que** le deuxième piston de soupape (28) est précontraint par un deuxième dispositif à ressort (31) à l'encontre de la pression régnant du côté du cylindre récepteur et sollicitant la surface annulaire (34), et peut être amené en appui contre une butée (33) formée sur la soupape.

8. Système hydraulique selon l'une quelconque des revendications précédentes, **caractérisé en ce que** le premier piston de soupape (14) est sollicité sur un côté situé en face de la première surface de retour (18) par un premier dispositif de ressort (15).

**9.** Système hydraulique selon l'une quelconque des revendications 5 à 8, **caractérisé en ce que** le deuxième piston de soupape (28) peut être amené en appui avec une surface de butée (32) formée sur le premier piston de soupape (14), de telle sorte qu'à partir de la valeur seuil prédéterminable, la pression régnant du côté du cylindre récepteur s'exerce sur la deuxième surface de retour (16) et la surface annulaire (34).

**10.** Système hydraulique selon l'une quelconque des revendications précédentes, **caractérisé en ce que** la soupape possède un boîtier de soupape (12) avec un alésage de soupape (13), dans lequel le premier piston de soupape (14) peut être déplacé axialement contre un premier dispositif de ressort (15) par sollicitation en pression au moyen d'une pression régnant du côté du maître-cylindre sollicitant une première surface de retour (18) par le biais de la conduite de fluide sous pression (4) et d'une première ouverture (10) dans le boîtier de soupape (12), et le boîtier de soupape (12) possède une deuxième ouverture (11), qui peut être fermée au moyen d'une arête de commande (17) réalisée sur le premier piston de soupape (14).

**11.** Système hydraulique selon la revendication 10, **caractérisé en ce que** le boîtier de soupape possède une troisième ouverture (40) par le biais de laquelle la pression régnant du côté du cylindre récepteur se propage dans un espace de pression (21) réalisé dans le boîtier de soupape pour solliciter la deuxième surface de retour (16) et la surface annulaire (34).

**12.** Système hydraulique selon l'une quelconque des revendications précédentes, **caractérisé en ce que** dans la conduite de fluide sous pression (4) entre le maître-cylindre (2) et la première surface de retour (18) est disposé un diaphragme pour amortir les oscillations du fluide sous pression.

**13.** Système hydraulique selon l'une quelconque des revendications 10 à 12, **caractérisé en ce qu'**une ramification (9) est disposée dans la conduite de fluide sous pression (4) entre la première (10) et la deuxième ouverture (11), et le maître-cylindre (2) est un cylindre hydraulique d'un véhicule commandé par la force du pied.

**14.** Système hydraulique selon l'une quelconque des revendications précédentes, **caractérisé en ce que** le cylindre récepteur (3) sollicite un dispositif d'actionnement (25) pour actionner un embrayage (26) d'un véhicule.

**15.** Utilisation du système hydraulique selon l'une quelconque des revendications précédentes pour actionner un embrayage (26) d'un véhicule.

**16.** Utilisation du système hydraulique selon l'une quelconque des revendications 1 à 14, pour compenser une augmentation de la force d'embrayage due à l'usure de l'embrayage.

# Fig. 1

EP 1 887 243 B1

## Fig. 2

EP 1 887 243 B1

**EP 1 887 243 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005041419 A1